# EUROPEAN PATENT APPLICATION

(11) **EP 2 426 577 A1**
(43) Date of publication of application: **07.03.2012**
(21) Application number: 10175060.2
(22) Date of filing: 02.09.2010
(51) Int. Cl.: G06F 3/033

(54) **Mouse and replaceable input component thereof**

(71) Applicant: Giga-Byte Technology Co., Ltd., Taipei 231 (TW)
(72) Inventor: Lin, Yin Yu, Hsin Tien, Taipei County 231, (TW); Chen, Shu-I, Hsin Tian, Taipei County 231, (TW)
(74) Representative: Schwerbrock, Florian

(57) **Abstract**

An assembled type mouse and a replaceable input component thereof are disclosed. The assembled type mouse includes a socket base and at least a replaceable input component, wherein the socket base includes a first electrical connector and a signal process unit. The replaceable input component includes a second electrical connector and two signal input members. The replaceable input component is simultaneously mechanically and electrically connected to the socket base by plugging the second electrical connector into the first electrical connector, makes an input signal input by the signal input member transmitted to the signal process unit by passing through the first electrical connector and the second electrical connector.

## Description

### BACKGROUND OF THE INVENTION

### (1) Field of the Invention

The present invention relates to a mouse and a replaceable component, more particularly to an assembled type mouse and a replaceable input component thereof, providing consumers for an additional choice of choosing appropriate replaceable input component for plugging in a socket base to assemble an ideal assembled type mouse matching with their personal requirements.

### (2) Description of the Prior Art

Nowadays, computers are prevalent in many aspects of our life, such like working, studying, entertaining, and social activity...etc. As a result, a mouse, an input device, has become one of important tools that we use almost everyday. In general, a conventional mouse basically includes a micro control unit and two signal input members electrically connected therewith. Each signal input member includes a relative button disposed on a housing of the mouse, either pressed down by user to input a signal. The signal is than transmitted to the micro control unit, controlling it to execute specific functions, such like operating a cursor on the display.

However, due to frequent pressing, the buttons of mice are easily broken. Once a button breaks, the whole mouse is usually abandoned while the micro control unit in it, which is much more expensive than buttons is generally still working, results in the waste of component and material. If we have efficient way to directly change the broken button from the mouse, we can cut down the repairing expense and prolong product life span.

Otherwise, prevalence of muscular diseases caused by over use of mouse, especially wrist syndrome, makes human factors engineering in design being highly concerned today. Though many manufacturers and designers have developed mouse products in various ways in pressing feedback, inclining angle, held form...etc. for aiming at different market segmentations, such like left-handed personnel and professional computer game players; nevertheless, the particular market scale is usually too small to make profits, which restricts the real customized mice to develop.

### SUMMARY OF THE INVENTION

Since buttons are easily broken and result in abundance of the whole mouse, and the human factors design of mice does not reach completely customized for individual requirement. Therefore, the primary object of the present invention is to provide an assembled type mouse and a replaceable input component thereof, wherein the assembled type mouse is composed of the replaceable input component and a socket base. Once the replaceable input component breaks, the user can directly change the broken replaceable input component, replacing it with a fine new one in convenient way and needs no repairing. Moreover, consumers can purchase desired one from various replaceable input components available in the market to assemble an ideal customized assembled type mouse.

The assembled type mouse according to the present invention includes a socket base and at least a replaceable input component, wherein the socket base includes a first electrical connector and a signal process unit electrically connecting therewith, and the replaceable input component includes a second electrical connector and at least one signal input member. The replaceable input component is simultaneously mechanically and electrically connected to the socket base by plugging the second electrical connector in the first electrical connector, which makes an input signal received by the signal input member to transmit to the signal process unit by passing through the first electrical connector and the second electrical connector.

In the first embodiment of the present invention, the assembled type mouse is composed of one socket base and two replaceable input components. The socket base further has two first coupling members, and each replaceable input component has a second coupling member coupling with the first coupling member for strengthening the mechanical connection of the replaceable input component and the socket base, wherein the first coupling member can be an engaging groove and the second coupling member can be an engaging hook, or vise versa.

In the second embodiment of the present invention, the assembled type mouse is also composed of one socket base and two replaceable input components as first embodiment. The difference from first embodiment is that one of the replaceable input components is replaced with another replaceable input component in particular human factors design, which makes the assembled type mouse become customized to particular consumers.

In third embodiment of the present invention, the assembled type mouse is composed of one socket base and one replaceable input component, wherein the replaceable input component has two signal input members.

Since the structure of a conventional mouse is indivisible, once single member breaks will lead to abandon of the whole product, the assembled type mouse of the present invention is composed of a socket base and at least a replaceable input component, wherein the replaceable input component can be easily and quickly replaced when it breaks. Moreover, the present invention also provides an advantage that consumers can assemble a customized mouse via choosing appropriate replaceable input component from various products available in the market.

### BRIEF DESCRIPTION OF THE DRAWINGS

Other features and advantages of this invention will become more apparent in the following detailed description of the preferred embodiments of this invention, with reference to the accompanying drawings, in which:

Figure 1 is a perspective view of the first embodiment of the assembled type mouse according to the present invention;

Figure 2 is a exploded view of the first embodiment of the assembled type mouse shown in Fig. 1;

Figure 3 is a functional block of the first embodiment of the assembled type mouse in;

Figure 4 is a top view of the second embodiment of the assembled type mouse according to the present invention;

Figure 4A is a front view of the second embodiment of the assembled type mouse shown in Fig. 4; and

Figure 5 is a top view of the third embodiment of the assembled type mouse according to the present invention.

### DETAILED DESCRIPTION OF THE PREFERRED EMBODIMENTS

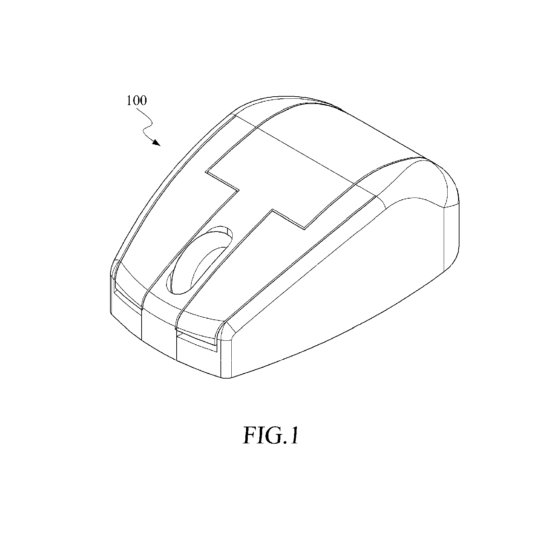

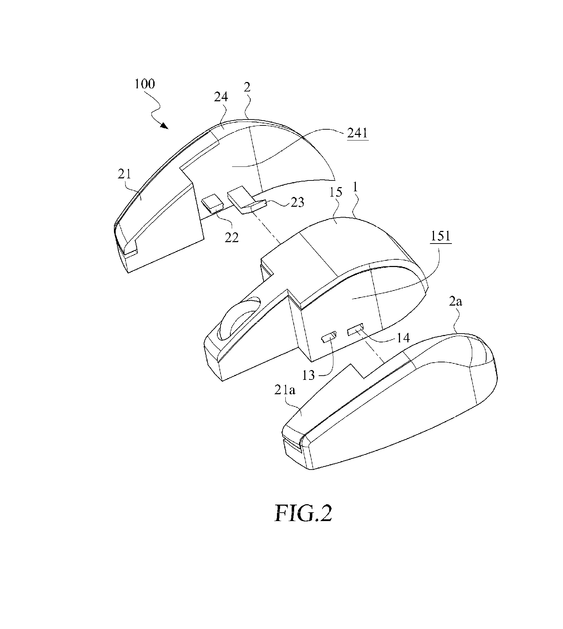

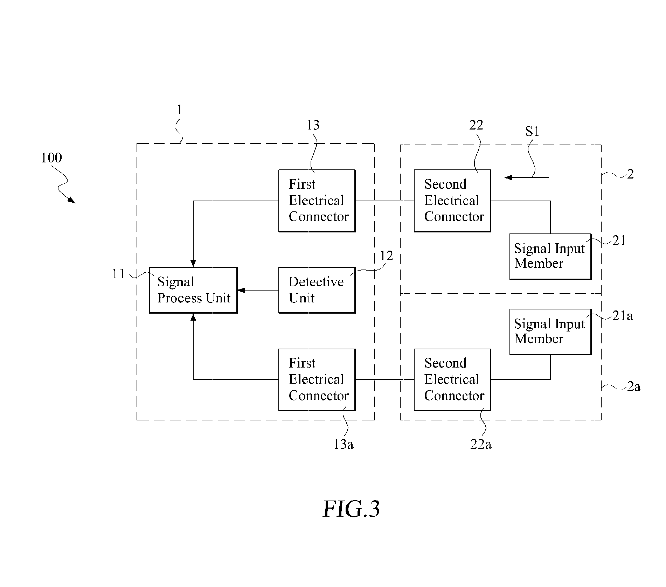

Referring to Figures 1-3, wherein Figure 1 is a perspective view of the first embodiment of the assembled type mouse according to the present invention; Figure 2 is a exploded view of the first embodiment of the assembled type mouse while Figure 3 shows a functional block of the first embodiment of the assembled type mouse in.

In this embodiment, the assemble type mouse 100 is composed of one socket base 1 and two replaceable input components 2 and 2a, wherein the Socket base 1 further has a base housing 15 having two first combining surfaces 151 respectively located on the two sides thereof. Interior of the base housing 15, the socket base 1 includes a signal process unit 11 and a detective unit 12. The signal process unit 11 can be a micro control unit; the detective unit 12 can be an optical sensor or a trackball, and is electrically connected to the signal process unit 11. Meanwhile, exterior of the base housing 15, the socket base 1 includes two first electrical connectors 13 and 13a (Figure 2 only shows "13" due to viewing angle) respectively disposed on the first combining surfaces 151, and two first coupling members (only one thereof shown in Figure 2 marked "14" due to viewing angle) respectively formed on the first combining surfaces 151.

The replaceable input component 2 and 2a respectively have two component housings 24, each of which has a second combining surface 241 relative to the first combining surface 151. The replaceable input component 2 further includes a signal input members 21, a second electrical connectors 22 and a second coupling members 23; so does the replaceable input component 2a, having a signal input members 21a, a second electrical connectors 22a (not shown in Figure 2) and a second coupling members(not shown). The second electrical connectors 22 and 22a are respectively disposed on the two second combining surfaces 241. In the same , the second coupling members 23 are also respectively disposed on the two second combining surfaces 241. Each of the signal input members 21 and 21a can be a button or a joystick, and combines with a switch for inputting an input signal S1.

Aforesaid first electrical connector 13 and aforesaid second electrical connector 22 can respectively be a socket and a plug, or vise versa. In the same manner, aforesaid first coupling member 14 and aforesaid second coupling member 23 can respectively be an engaging groove and an engaging hook, or vise versa.

For simultaneously mechanically and electrically connecting replaceable input component 2 and 2a with socket base 1, the second electrical connectors 22 and 22a respectively are plugged into the first electrical connectors 13 and 13a. Meanwhile, for strengthening mechanically connection between the replaceable input component 2 and the socket base 1, the second coupling members 23 are also respectively coupled with the first coupling members 14. The socket base 1 and the replaceable input components 2 and 2a are assembled together to be the assembled type mouse 100 via the above-mentioned connection.

Thus, the input signal S1, which is inputted via one of the signal input members 21 and 21a, can be transmitted to the signal process unit 11 by passing through the second electrical connector 22 and the first electrical connector 13. At the same time, a detective signal is transmitted to the signal process unit 11 for executing it to control the connecting computer.

The distinguishing feature of the assembled type mouse 100 of the present invention is that it is being composed of a socket base 1 and two replaceable input components 2 and 2a, which of all can be sold independently on the market. As a result, when compared to the conventional mouse, which can hardly be divided, the assembled type mouse 100 of the present invention has that advantages that consumers can easily replace anyone of the replaceable input components 2 and 2a with a more matching one by choosing from market, creating a customized mouse with desired human factors design in terms of held form, pressing feedback, and inclining angle. Therefore, the assembled type mouse 100 of the present invention can substantially match each consumer's own personal requirement.

For example, human factors design, the conventional mouse is usually designed for right-handed personnel, which is extremely not useful and friendly to the left-handed personnel. As mice designed for left-handed personnel are very rare, the left-handed personnel with additional requirements, like pressing feedback, can hardly find a desired mouse in the market.

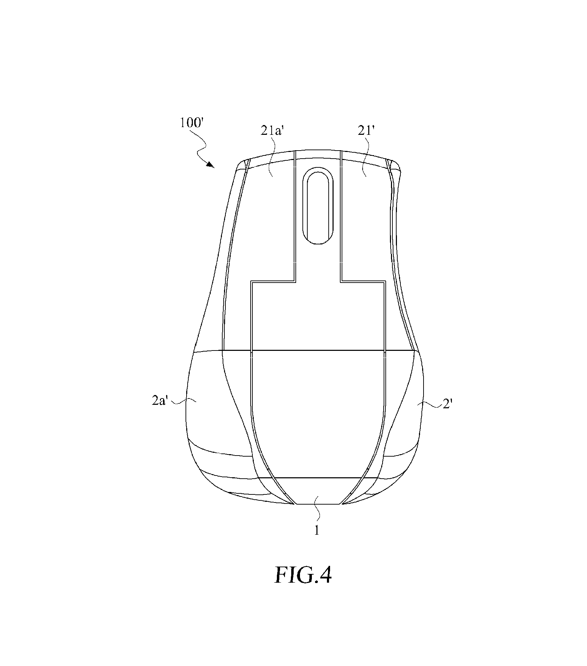

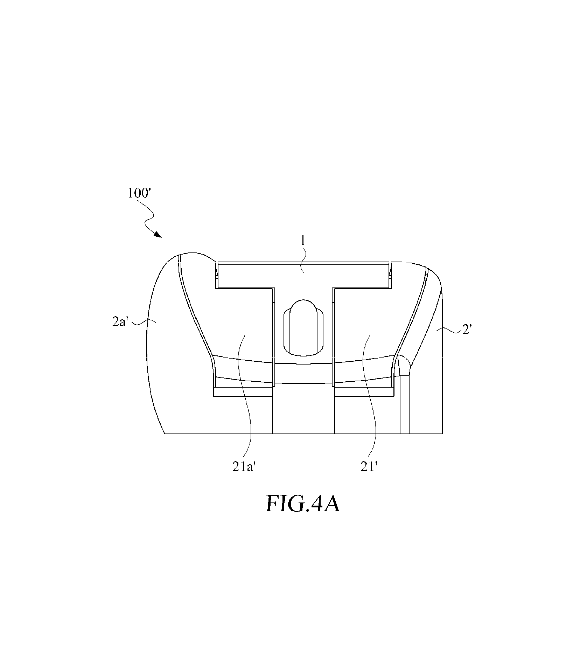

Referring to Figures 4 and Figures 4A, wherein Figure 4 is a top view of the second embodiment of the assembled type mouse according to the present invention while Figure 4A is a front view of the second embodiment of the assembled type mouse. As shown, the assembled type mouse 100' is composed of the aforesaid socket base 1, and two replaceable input components 2' and 2a' different from replaceable input components 2 and 2a of the first embodiment in the terms of holding form and inclining angle. The replaceable input components 2' is wider and more protruding than replaceable input components 2a' to match the left-handed personal shape, which makes the assembled type mouse 100' to be useful and -friendly to the left-handed personnel.

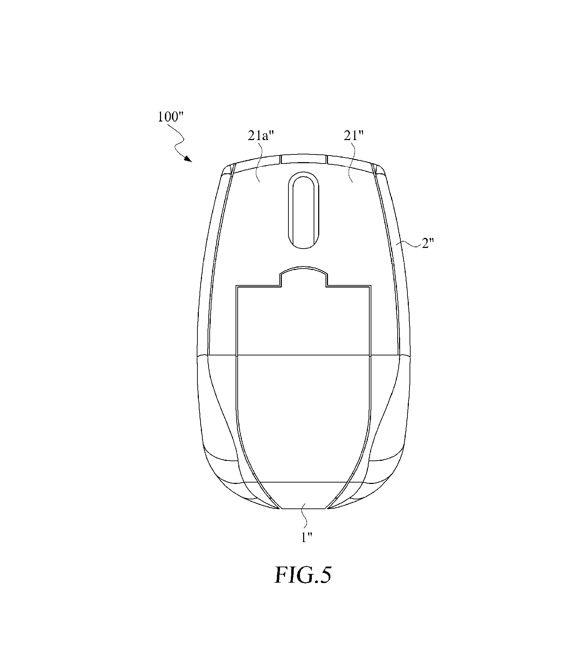

Referring to Figures 5, which is a top view of the third embodiment of the assembled type mouse according to the present invention. The assembled type mouse 100" can also be composed of one socket base 1" and a single replaceable input component 2". The replaceable input component 2" has one second electrical connector (not shown) and two signal input members 21" and 21a", and is combined with the socket base 1" by plugging into the second electrical connector (not shown) therein.

Since the conventional mouse has an indivisible entire structure, once a single member breaks can lead to abandon of the whole product. The assembled type mouse 100 of the present invention is composed of a socket base 1 and at least a replaceable input component 2, which can be easily and quickly replaced when the item is broken, which provides the user with convenience to change broken component easily. Moreover, the assembled type mouse 100 of the present invention further provides an advantage that consumers can assemble a desired customized mouse via choosing desired replaceable input component 2 from various products available in the market. Thus, the present invention is much more useful and practical than the prior art.

While the invention has been described in connection with what is considered the most practical and preferred embodiments, it is understood that this invention is not limited to the disclosed embodiments but is intended to cover various arrangements included within the spirit and scope of the broadest interpretation so as to encompass all such modifications and equivalent arrangements.

## Claims

1. An assembled type mouse, comprising:
a socket base, including:
at least a first electrical connector, and
a signal process unit electrically connected to said first electrical connector; and
at least one replaceable input component, including
a second electrical connector for plugging into said first electrical connector in order to simultaneously mechanically and electrically connect said replaceable input component within said socket base; and
at least one signal input member for inputting an input signal and transmitting said input signal to said signal process unit by passing through said second electrical connector and said first electrical connector.

2. The assembled type mouse according to claim 1, wherein said socket base has a first coupling member, said replaceable input component having a second coupling member to couple with said first coupling member for mechanically connecting said replaceable input component with said socket base.

3. The assembled type mouse according to claim 2, wherein said first coupling member is an engaging groove, and said second coupling member is an engaging hook.

4. The assembled type mouse according to claim 2, wherein said first coupling member is an engaging hook, and said second coupling member is an engaging groove.

5. The assembled type mouse according to claim 1, wherein said signal input member is either a button or a joystick.

6. The assembled type mouse according to claim 1, wherein said socket base has a detective unit electrically connected to said signal process unit.

7. The assembled type mouse according to claim 6, wherein said detective unit is either an optical sensor or a trackball.

8. A replaceable input component applied to plug into a first electrical connector of a socket base for forming a assembled type mouse, the replaceable input component comprising:
a second electrical connector for plugging into said first electrical connector in order to simultaneously mechanically and electrically connecting said replaceable input component with said socket base ;
at least a signal input member for inputting an input signal and transmitting said input signal to said signal process unit by passing through said second electrical connector and said first electrical connector.

9. The replaceable input component according to claim 8, further has a second coupling member, said socket base further having a first coupling member to couple with said second coupling member for mechanically connecting said replaceable input component with said socket base.

10. The replaceable input component according to claim 8, wherein said signal input member is either a button or a joystick.
